# EUROPEAN PATENT APPLICATION

(11) **EP 4 667 676 A1**
(43) Date of publication of application: **24.12.2025**
(21) Application number: 25182901.6
(22) Date of filing: 16.06.2025
(51) Int. Cl.: E04D 1/20, E04D 5/02, E04D 5/10, B32B 5/02, B32B 7/12, B32B 27/12, B32B 27/32, B32B 27/36

(54) **FLEECE BACK MEMBRANE**

(30) Priority: 17.06.2024 US 202463660784 P; 21.02.2025 US 202519060307
(71) Applicant: Mapei S.p.A., 20158 Milano (IT)
(72) Inventor: GAMA, Dennyele, Deerfield Beach (US); SIEBER, Marco Yoshua, Deerfield Beach (US); ACHA, Betiana, Deerfield Beach (US); GORY, Christopher, Deerfield Beach (US); ALPERT, Maury, Deerfield Beach (US); GRUBE, Louis, Deerfield Beach (US)
(74) Representative: Bianchetti & Minoja with Trevisan & Cuonzo IPS SRL

(57) **Abstract**

A construction material with an exposed fleece surface including (i) a planar fleece substrate having first and second opposed planar surfaces, (ii) said planar fleece type substrate is partially saturated on the first planar surface with a first compound that penetrates the fleece type substrate about half way, (iii) said first compound is then partially removed leaving a thin layer of first compound about half way between the first and second opposed planar surfaces of the fleece substrate, (iv) a second compound is applied on the first planar surface forming a fleece membrane with an exposed surface that is partially saturated with two distinct compounds, (v) and said second compound or a different third compound is applied along one edge of the exposed second planar fleece surface of the fleece substrate forming a side lap along the length of the fleece membrane.

## Description

### CROSS-REFERENCE TO RELATED APPLICATION

The present application claims the benefit of priority to U.S. Provisional Application Serial No. 63/660,784, filed on June 17, 2024, which is incorporated herein by reference in its entirety.

### BACKGROUND

### Field of Invention

The present disclosure relates to a construction material with an exposed fleece surface.

### Discussion of the Background

Fleece back construction material membranes are commonly used as underlayments, primarily over rough surfaces, for example, granulated cap sheets in reroofing situations, over light weight concrete and when it is desired to reduce labor costs by not using mechanical fasteners to adhere an underlayment or base sheet to the building structure. Fleece back construction membranes are typically adhered to the structure using suitable adhesives that penetrate the exposed fleece surface. These adhesives include low rise urethan foam, hot mopped bitumen and or mastics to name a few. Typical fleece membranes used in the industry today include multiple substrates and multiple membranes where the fleece substrate is bonded to another finished membrane so that one surface of the fleece type substrate is exposed. Several examples of this expensive type of fleece type membranes are listed below.

U.S. Patent No. 10,443,190 to Wenstrup discloses a composite roofing membrane containing a single ply roofing membrane containing a first membrane, a scrim, and a second membrane. The first side of the first membrane forms the upper surface of the composite roofing membrane and contains a thermoplastic polymer. The scrim has a machine and cross-machine direction and contains a yarn or fiber selected from the group consisting of polyester and glass, and a tensile strength in the machine direction is at least about 100 N/cm². The second membrane contains a thermoplastic polymer. The composite roofing membrane also contains a fire-resistant fleece containing a plurality of FR rayon staple fibers and a plurality of char scaffold fibers selected from the group consisting of partially oxidized acrylonitrile and silica staple fibers.

U.S. Patent No. 11,192,328 to Zhou et al. discloses a thermoplastic membrane composite comprising (i) a planar thermoplastic body having first and second opposed planar surfaces; (ii) a fabric backing fixedly attached to said first planar surface thereby forming an interface between said thermoplastic body and said fabric backing; and (iii) expandable graphite disposed at or near the interface.

U.S. Patent application Publication No. 2021/0332591 to Wenstrup discloses a bitumen roofing composite is described having an upper surface and a lower surface. The bitumen roofing composite contains a first composite bitumen layer and a fire resistant (FR) fleece. The first composite bitumen layer has a first side and a second side and contains a first carrier saturated with bitumen. The FR fleece has a first side and a second side, where the first side of the FR fleece and the second side of the first bitumen composite layer are in intimate contact. The FR fleece contains a plurality of FR staple fibers and a plurality of first char scaffold fibers.

These multiple substrate membranes can be difficult to manufacture, are expensive and are over engineered for their indented use in the building construction industry. The adhered fleece material can delaminate at the adhesive interface between the fleece and membrane causing material failure during their service life.

### SUMMARY

Aspects of the invention may relate to a construction material with an exposed fleece surface that utilizes a single fleece substrate. The single fleece substrate may have a top and bottom surface where the fleece substrate is partially saturated on the bottom surface during manufacturing with a first compound that penetrates the single fleece substrate about halfway. This first compound may be partially removed leaving a thin layer of the first compound in the single fleece substrate (e.g., about halfway in the single fleece substrate). A second compound may be applied on the same side as the removed first compound creating a dual compound partially saturated fleece substrate that will not delaminate. A second or third compound may be applied on the opposite side along a section of the long edge of the non-saturated single fleece substrate forming a side lap for bonding overlapping membranes. The single fleece substrate construction material may be cut to length and reverse wound into rolls so that the exposed unsaturated fleece substrate and the side lap for bonding overlapping rolls are located on the outermost or bottom part of the roll. During application, the unsaturated fleece substrate that is on the lower or bottom surface of the roll may be adhered to the building structure with a suitable adhesive.

One aspect of the invention may provide a fleece back membrane. The fleece back membrane may include a fleece substrate, a first compound, a second compound, and a plastic surface film. The fleece substrate may include a first surface and a second surface opposite the first surface. The first surface of the fleece substrate may be exposed. The first compound may be in the fleece substrate between the first and second surfaces of the fleece substrate. The second compound may be in the fleece substrate between the first compound and the second surface of the fleece substrate and covering the second surface of the fleece substrate. The second compound may be different than the first compound. The plastic surface film may be applied to the second compound that covers the second surface of the fleece substrate.

In a preferred embodiment, the second surface of the fleece back membrane is partially saturated with the first compound between 40 - 60% the thickness of the fleece substrate.

In a preferred embodiment, the first compound is partially scraped off the second surface of the fleece substrate, and the second compound is applied to that second surface of the fleece substrate after the first compound is partially scraped off the second surface of the fleece substrate.

In a preferred embodiment, the exposed first surface of the fleece substrate is unsaturated.

In a preferred embodiment, the fleece substrate is a non-woven polyester.

In a preferred embodiment, the fleece back membrane has a thickness between 0.5 and 2.0 mm. In a preferred embodiment, the first compound is a plastic modified bitumen compound.

In a preferred embodiment, the first compound has a specific gravity between 1.1 and 2.0; the first compound has a viscosity between 1000 - 12000 cps measured at 180C by ASTM D4402; the first compound has a ring and ball softening point of 100-160 Celsius by ASTM D36; the first compound has a needle penetration of 40-160 dmm @60°C, 100g total weight for 5 seconds by ASTM D5.

In a preferred embodiment, the second compound is a self-adhering rubber modified bitumen compound.

In a preferred embodiment, the second compound has a specific gravity between 0.7 - 1.8; the second compound has a viscosity between 1000 - 10000 cps measured at 180C by ASTM D4402; the second compound has a ring and ball softening point of 100 - 130 Celsius by ASTM D36; the second compound has a needle penetration of 50-100 dmm @25°C, 100g total weight for 5 seconds by ASTM D5; the second compound has a needle penetration of 100 - 240 dmm @60C, 100g total weight for 5 seconds by ASTM D5.

In a preferred embodiment, the fleece back membrane has a weight between 1.5 - 3.1 kg/m2; the fleece back membrane has a width between 0.7 and 1.5 meters.

In a preferred embodiment, the fleece back further comprises a self-adhering compound located in a side lap area of the fleece substrate along one edge of the exposed first surface of the fleece substrate.

In a preferred embodiment, the self-adhering compound has a width of 76 +/- 5 mm and a weight between 25 - 45 g/m.

In a preferred embodiment, the fleece back membrane has a finished product weight of 1.5 - 3.1 kg/m2; the fleece back membrane has a Youngs modulus of 250 - 350 MPa in the machine direction (MD) as tested by ASTM D882.

In a preferred embodiment, the construction material membrane has a Youngs Modulus of 100 - 200 MPa in the cross-machine direction (CMD) as tested by ASTM D882.

In a preferred embodiment, the self-adhering compound in the side lap area of the fleece substrate and the second compound are the same.

In a preferred embodiment, the self-adhering compound in the side lap area of the fleece substrate is a third compound that is different than the first and second compounds.

In a preferred embodiment, the third compound has a specific gravity of 0.7 - 1.8; the third compound has a viscosity of 100 - 3000 cps measured at 180C by ASTM D4402; the third compound has a ring and ball softening point of 80 - 130 Celsius by ASTM D36; the third compound has a has a needle penetration of 40 - 150 dmm @25°C, 50g total weight for 5 seconds by ASTM D5.

In a preferred embodiment, the fleece substrate has a basis weight between 140 - 300 g/m².

In a preferred embodiment, the fleece substrate has a width between 0.7 - 1.5 meters.

Another aspect of the invention may provide a process of making a fleece back membrane. The process may include passing a fleece substrate over a kiss roll that is in contact with a first compound from a first compound vat. The fleece substrate may include a first surface and a second surface opposite the first surface, and the first compound may partially penetrate the fleece substrate through the second surface of the fleece substrate. The process may include partially removing the first compound from the second surface of the fleece substrate with a full width scraper and leaving a thin layer of the first compound in the fleece substrate between the first and second surfaces of the fleece substrate. The process may include applying a second compound to the second surface of the fleece substrate. The second compound may penetrate the fleece substrate to the first compound when contacting a bottom thickness roll in a second compound vat. The second compound that penetrates the fleece substrate may be between the first compound and the second surface of the fleece substrate. The second compound may be different than the first compound. The process may include using a rotating smoothing bar to remove excess second compound from the second surface of the fleece substrate. The second compound may cover the second surface of the fleece substrate. The process may include applying a plastic surface film to the second compound on the bottom surface of the fleece substrate to create the fleece back membrane. The first surface of the fleece substrate may be exposed.

In a preferred embodiment, the process further comprises unrolling the fleece substrate from a roll. In a preferred embodiment, the first compound penetrates the second surface of the fleece substrate about halfway.

In a preferred embodiment, the thin layer of the first compound left in the fleece substrate weighs between 0.2 - 0.8 kg/m².

In a preferred embodiment, the process further comprises applying a self-adhering compound to a side lap area on the first side of the fleece substrate using a side lap compound applicator.

In a preferred embodiment, the self-adhering compound applied to the side lap area has a width of 76 +/- 5 mm.

In a preferred embodiment, the self-adhering compound applied to the side lap area weighs between 25 - 45 g/m.

In a preferred embodiment, the process further comprises using a top thickness roller to adjust a thickness of the self-adhering compound in the side lap area.

In a preferred embodiment, the process further comprised applying a side lap release film to the self-adhering compound in the side lap area.

In a preferred embodiment, after using the rotating smoothing bar to remove the excess self-adhering second compound from the second surface of the fleece substrate, a thickness of 0.2 - 1.3 mm of the second compound remains on the second surface of the fleece substrate.

In a preferred embodiment, the process further comprised reverse winding the fleece back membrane so that the exposed first surface of the fleece substrate with the side lap area is a bottom of the fleece back membrane and the plastic surface film is the top surface of fleece back membrane.

In a preferred embodiment, the exposed first surface of the fleece substrate is unsaturated.

These and other embodiments encompassed within the systems and methods are described in the detailed description of the invention below.

### BRIEF DESCRIPTION OF THE DRAWINGS

The accompanying drawings, which are incorporated herein and form part of the specification, illustrate various, non-limiting embodiments of the present invention. In the drawings, like reference numbers indicate identical or functionally similar elements.
FIGS. 1, 2, 5 & 6 are cross-sectional views illustrating different embodiments of single substrate fleece construction material membranes embodying aspects of the present invention.
FIG. 3 & 7 show an expanded segment of a production process for the single substrate fleece construction material membrane.
FIG. 4 & 8 show a production process for the single substrate fleece construction material membrane embodying aspects of the present invention.
FIG. 9 shows a roll of the fleece back membrane that has been reverse wound.

### DETAILED DESCRIPTION

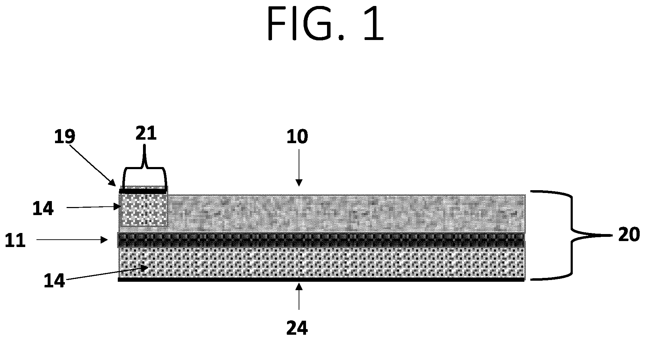

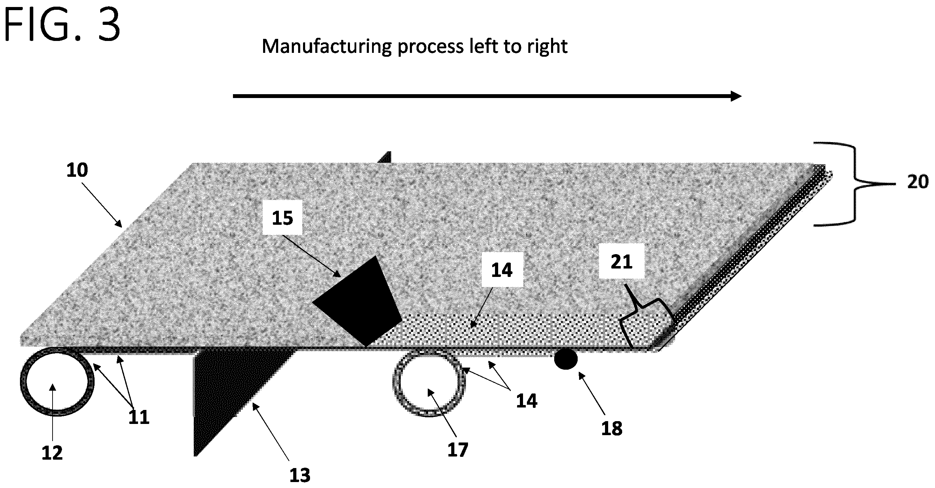

FIG. 1 shows a cross section of a single fleece back construction material membrane 20 including a single fleece substrate 10 that has a top and bottom side surface. Fleece substrate 10 may be a non-woven polyester (PET) substrate or similar substrate used for fleece back membranes. The bottom side surface of fleece substrate 10 may be partially saturated during manufacturing with first compound 11 that penetrates fleece substrate 10 (e.g., around 40 - 60% of the overall thickness of fleece substrate 10 or about halfway into the thickness of fleece substrate 10). First compound 11 may be partially removed using full width scraper 13 as shown in Fig. 3 leaving a thin layer of first compound 11 about 40 - 60% into the overall thickness of fleece substrate 10. The weight of first compound 11 in single fleece substrate 10 may be about 0.2 - 0.8 kg/m2.

Second compound 14 may then be applied to the same bottom side surface as was first compound 11 of fleece substrate 10. Second compound 14 may penetrate fleece substrate 10 until it joins with first compound 11 forming a dual compound partially saturated fleece substrate 10. Second compound 14 may form a layer of compound that completely covers the bottom side surface of fleece substrate 10 (e.g., to a thickness about 0.5 - 3.5mm). Plastic surface film 24 may be applied to second compound 14 along the entire bottom side surface of fleece substrate 10 to prevent sticking during manufacturing, storage, and transportation. Plastic surface film 24 may also provide a walkable surface during application to the building structure.

Second compound 14 may then be applied to the opposite side or top side surface of fleece substrate 10 to a section along the length of the top surface side of fleece substrate 10 forming side lap area 21. Second compound 14 may have a thickness of, for example, about 0.2 - 1.3mm on the top surface side of fleece substrate 10. Second compound 14 may partially saturate the top side surface of fleece substrate 10 in side lap area 21. Release film 19 may be applied to second compound 14 in side lap area 21 to prevent sticking of second compound 14 during manufacturing, storage, and transportation.

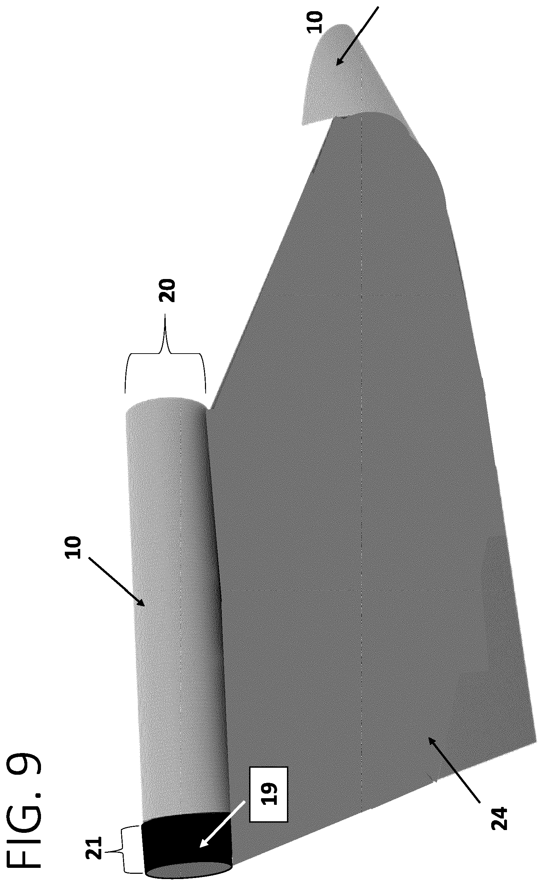

Fleece back membrane 20 may have a finished product weight of, for example, about 1.5 - 3.1 kg/m2. Fleece back membrane 20 may have an overall thickness of, for example, about 1.5 - 4.0mm. Fleece back membrane 20 may be reverse wound as shown in FIG. 9 so that the top side surface of unsaturated fleece substrate 10 becomes the bottom of the fleece back membrane 20 and plastic surface film 24 becomes the top walkable surface of fleece back membrane 20 during application to the building structure. Release film 19 may be removed during application so that second compound 14 in side lap area 21 now located on the bottom side surface of fleece back membrane 20 can bond to plastic surface film 24 located now on the top side surface of fleece back membrane 20 as subsequent rolls of fleece back membrane 20 are overlapped and adhered to the building structure using suitable adhesives, not shown in FIG. 1.

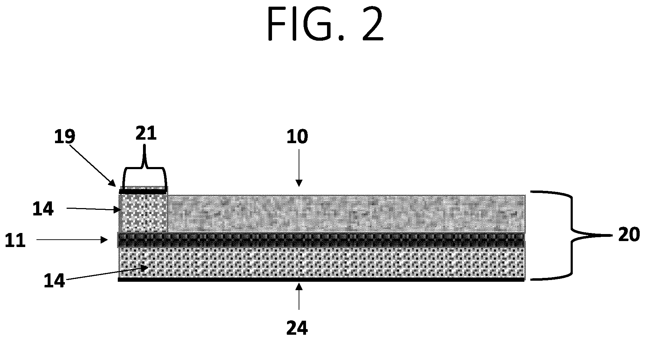

FIG. 2 shows a cross section of fleece back membrane 20 including a single fleece substrate 10 that has a top and bottom side surface. Fleece substrate 10 may be a non-woven polyester (PET) substrate or similar substrate used for fleece back membranes. The bottom side surface of fleece substrate 10 may be partially saturated during manufacturing with first compound 11 that penetrates fleece substrate 10 (e.g., around 40 - 60% of the overall thickness of fleece substrate 10 or about halfway into the thickness of fleece substrate 10).First compound 11 may be partially removed using full width scraper 13 as shown in Fig. 3 leaving a thin layer of first compound 11 in fleece substrate 10 (e.g., about 40 - 60% into the overall thickness of fleece substrate 10.) The weight of first compound 11 in single fleece substrate 10 may be, for example, about 0.2 - 0.8 kg/m2.

Second compound 14 may then be applied to the same bottom side surface as was first compound 11 of fleece substrate 10. Second compound 14 may penetrate fleece substrate 10 until it joins with first compound 11 forming a dual compound partially saturated fleece substrate 10. Second compound 14 may form a layer of compound that completely covers the bottom side surface of fleece substrate 10 to a thickness about 0.5 - 3.5mm. Plastic surface film 24 may be applied to second compound 14 along the bottom side surface of fleece substrate 10 to prevent sticking during manufacturing, storage, and transportation. Plastic surface film 24 may also provide a walkable surface during application to the building structure.

Second compound 14 may then be applied to the opposite side or top side surface of fleece substrate 10 to a section along the length of the top surface side of fleece substrate 10 forming side lap area 21. Second compound 14 in side lap area 21 may have a thickness of, for example, about 0.2 - 1.3mm. Second compound 14 may penetrate the top side surface of fleece substrate 10 during manufacturing of fleece back membrane 20 contacting first compound 11 that was applied to the bottom side surface of fleece substrate 10. First compound 11 may saturate the bottom side surface of fleece substrate 10 and penetrate the bottom surface side of fleece substrate 10 (e.g., to a distance that is about 40-60% of the thickness of fleece substrate 10 or about halfway into the thickness of fleece substrate 10 leaving the top side surface of fleece substrate 10 unsaturated with first compound 11). Release film 19 may be applied to second compound 14 in side lap area 21 to prevent sticking of second compound 14 during manufacturing, storage, and transportation.

Fleece back membrane 20 may have a finished product weight of, for example, about 1.5 - 3.1 kg/m2 and may have an overall thickness of, for example, about 1.5 - 4.0mm. Fleece back membrane 20 may be reverse wound as shown in FIG. 9 so that the top side surface of unsaturated fleece substrate 10 becomes the bottom of the fleece back membrane 20 and plastic surface film 24 becomes the top walkable surface of fleece back membrane 20 during application to the building structure. Release film 19 may be removed during application so that second compound 14 in side lap area 21 now located on the bottom side surface of fleece back membrane 20 can bond to plastic surface film 24 located now on the top side surface of fleece back membrane 20 as subsequent rolls of fleece back membrane 20 are overlapped and adhered to the building structure using suitable adhesives, not shown in FIG. 2.

FIG. 3 shows an expanded section for a manufacturing process for fleece back membrane 20. Fleece membrane 20 has a top side surface and a bottom surface side surface. During manufacturing, the bottom side surface of fleece substrate 10 that may be a non-woven polyester (PET) substrate or similar substrate used for fleece back membranes, may contact inking roll 12 containing first compound 11 that partially saturates and coats the entire bottom side surface of fleece substrate 10. Compound 11 may penetrate fleece substrate 10 (e.g., to a distance that is about 40-60% of the thickness of fleece substrate 10) leaving the top surface side of fleece substrate 10 unsaturated with first compound 11. First compound 11 may be partially removed from the bottom surface side of fleece substrate 10 using full width scraper 13 leaving a thin layer of first compound 11 about halfway the thickness of fleece substrate 10. The weight of first compound 11 in single fleece substrate 10 may be, for example, about 0.2 - 0.8 kg/m2.

The bottom surface side of fleece substrate 10 may encounter bottom thickness roll 17 that applies second compound 14 on the entire bottom side surface of fleece substrate 10 contacting the thin layer of first compound 11. Excess second compound 14 along the bottom surface side of fleece substrate 10 may be removed with rotating smoothing bar 18 forming the desired thickness of, for example, about 0.5 - 3.5mm of second compound 14 on fleece substrate 10. Fleece substrate 10 is now partially saturated and the bottom side surface during manufacturing with two compounds, compound 11 and compound 14 leaving the upper or top side surface of substrate 10 unsaturated. Using two compounds and a single fleece substrate in fleece back membrane 20 may help prevent the unsaturated fleece portion of single fleece substrate 10 in fleece back membrane 20 from delaminating during and after installation giving fleece back membrane 20 an advantage over competitors.

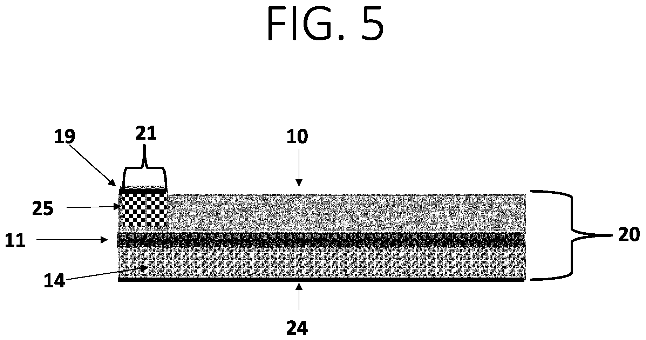

In this manufacturing process, second compound 14 may be applied along one edge of the length of fleece substrate 10 using side lap compound applicator 15 to form a side lap 21 along one edge of the length of fleece substrate 10 Second compound 14 may have a thickness of, for example, 0.2 - 1.3 mm along the entire side lap area. The top side surface of fleece substrate 10 may remain unsaturated with first compound 11 or with second compound 14 except at side lap area 21. Fleece back membrane 20 may have an overall thickness of, for example, about 1.5 - 4.0mm and may have a finished product weight of, for example, about 1.5 - 3.1 kg/m2. The membrane may be cut to length and reverse wound, not shown, forming fleece back membrane 20 as shown in FIG 5.

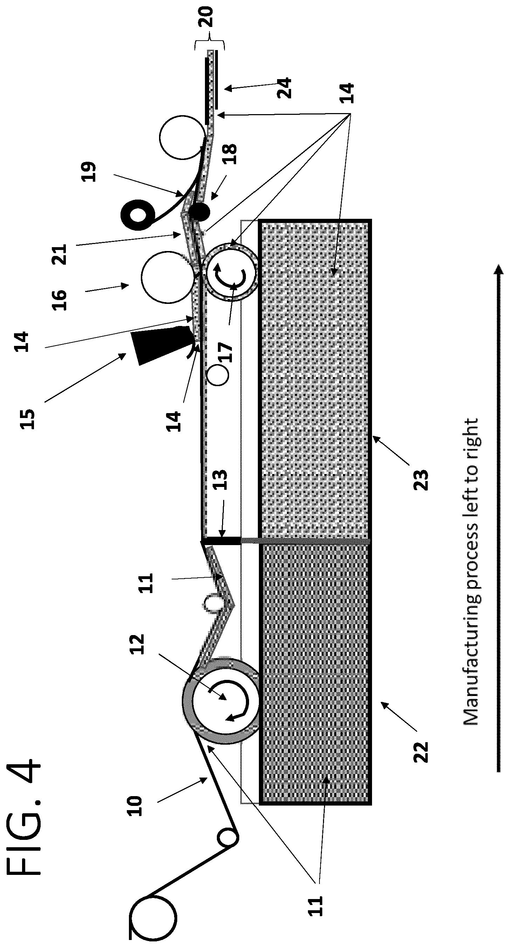

FIG. 4 shows one manufacturing process for fleece back membrane 20. Fleece membrane 20 has a top side surface and a bottom surface side surface. Fleece substrate 10 has a top side and bottom side surface and is unwound and fed into a dry end looper, not shown, so that the manufacturing process is not interrupted when a new roll of fleece substrate 10 is spliced on, not shown. The bottom side surface of fleece substrate 10 passes onto and encounters inking roll 12 that is in contact with first compound 11 in first compound vat 22. First compound 11 partially saturates and coats the bottom side surface of fleece substrate 10 and penetrates fleece substrate 10 (e.g., around 40-60% the overall thickness of fleece substrate 10 or about half the thickness of fleece substrate 10). First compound 11 may be partially removed from the bottom side surface of fleece membrane 10 with full width scraper 13 removing most of first compound 11 but leaving a thin layer of first compound 11 about half the thickness of fleece substrate 10. The weight of first compound 11 in single fleece substrate 10 may be, for example, about 0.2 - 0.8 kg/m2. The bottom side surface of fleece substrate 10 containing compound 11 then encounters bottom thickness roll 17 that applies second compound 14 from second vat 23. Second compound 14 is applied to the bottom side surface of fleece substrate 10 so that it encounters and joins up with the thin layer of first compound 11.

Excess second compound 14 may be removed using rotating smoothing bar 18 forming the desired thickness of, for example, about 0.5 - 3.5mm along the entire bottom side surface of fleece substrate 10. Plastic surface film 24 may be applied to second compound 14 on the bottom side surface of fleece substrate 10 to prevent sticking during manufacturing, storage, and transportation. Plastic film 24 may also form a walking surface during application to the building structure. Second compound 14 in this manufacturing process, may also applied along one edge the length of fleece substrate 10, to a section of the top side surface of fleece substrate 10 in side lap area 21 using side lap compound applicator 15. The thickness of second compound 14 in side lap area 21 may be, for example, about 0.2 - 1.3 mm and may be controlled with top thickness roll 16. Release film 19 may be applied to second compound 14 in side lap area 21 to prevent sticking during manufacturing, storage, and transportation. Fleece back membrane 20 may have a finished product weight of, for example, about 1.5 - 3.1 kg/m2, may have an overall thickness of, for example, about 1.5 - 4.0mm, and may be cut to the desired length and reverse wound as shown in FIG. 9. Release film 19 may be removed during application to bond overlapping rolls of fleece back 20. FIG. 5 shows a cross section of the single fleece back construction material membrane 20 including a single fleece substrate 10 that has a top and bottom side surface. Fleece substrate 10 may be a non-woven polyester (PET) substrate or similar substrate used for fleece back membranes. The bottom side surface of fleece substrate 10 may be partially saturated and coated during manufacturing with first compound 11 that penetrates fleece substrate 10 (e.g., around 40 - 60% of the overall thickness of fleece substrate 10 or about halfway into the thickness of fleece substrate 10). First compound 11 may be partially removed using full width scraper 13 leaving a thin layer of first compound 11 in the fleece substrate 10 (e.g., about 40 - 60% into the overall thickness of fleece substrate 10). The weight of first compound 11 in single fleece substrate 10 may be, for example, about 0.2 - 0.8 kg/m2.

Second compound 14 may then be applied to the same bottom side surface as first compound 11. Second compound 14 may penetrate fleece substrate 10 until it joins with first compound 11 forming a dual compound partially saturated fleece substrate 10. Second compound 14 may form a layer of compound that completely covers the bottom side surface of fleece substrate 10 to a thickness of, for example, about 0.5 - 3.5mm. Plastic surface film 24 may be applied to second compound 14 along the bottom side surface of fleece substrate 10 to prevent sticking during manufacturing, storage, and transportation. Plastic surface film 24 may also provide a walkable surface during application to the building structure. Using two compounds and a single fleece substrate in fleece back membrane 20 may help prevent the unsaturated fleece portion of single fleece substrate 10 in fleece back membrane 20 from delaminating during and after installation giving fleece back membrane 20 an advantage over competitors.

Third compound 25 may then be applied to the top side surface of fleece substrate 10 to a section along the length of the top surface side of fleece substrate 10 forming side lap area 21. Third compound 25 may have a thickness of, for example, about 0.2 - 1.3mm and may partially saturate the top side surface of fleece substrate 10 in side lap area 21. Release film 19 may be applied to third compound 25 in side lap area 21 to prevent sticking of third compound 25 during manufacturing, storage, and transportation.

Fleece back membrane 20 may have an overall thickness of, for example, about 1.5 - 4.0mm and may have a finished product weight of, for example, about 1.5 - 3.1 kg/m2. Fleece back membrane 20 may be reverse wound as shown in FIG. 9 so that the top side surface of unsaturated fleece substrate 10 becomes the bottom of the fleece back membrane 20 and plastic surface film 24 becomes the top walkable surface of fleece back membrane 20 during application to the building structure. Release film 19 may be removed during application so that third compound 25 in side lap area 21 now located on the bottom side surface of fleece back membrane 20 can bond to plastic surface film 24 located now on the top side surface of fleece back membrane 20 as subsequent rolls of fleece back membrane 20 are overlapped and adhered to the building structure using suitable adhesives, not shown in FIG. 5.

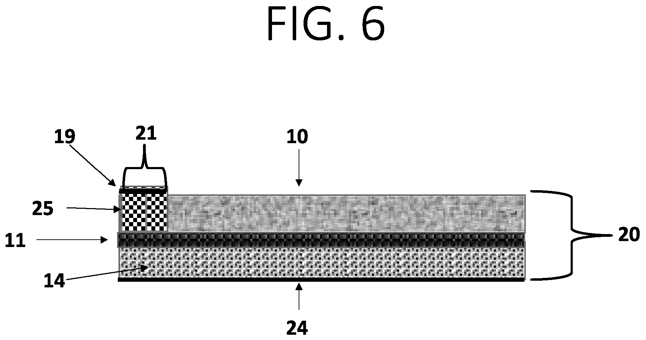

FIG. 6 shows a cross section of fleece back membrane 20 including a single fleece substrate 10 that has a top and bottom side surface. Fleece substrate 10 may be a non-woven polyester (PET) substrate or similar substrate used for fleece back membranes. The entire bottom side surface of fleece substrate 10 may be partially saturated and coated during manufacturing with first compound 11 that penetrates fleece substrate 10 (e.g., around 40 - 60% of the overall thickness of fleece substrate 10 or about halfway into the thickness of fleece substrate 10). First compound 11may be partially removed using full width scraper 13 as shown in Fig. 3 leaving a thin layer of first compound 11 in the fleece substrate (e.g., about 40 - 60% into the overall thickness of fleece substrate 10). The weight of first compound 11 in single fleece substrate 10 may be, for example, about 0.2 - 0.8 kg/m2.

Second compound 14 may then be applied to the same bottom side surface as was first compound 11 of fleece substrate 10. Second compound 14 penetrates fleece substrate 10 until it joins with first compound 11 forming a dual compound partially saturated fleece substrate 10. Second compound 14 may form a layer of compound that completely covers the entire bottom side surface of fleece substrate 10 to a thickness of, for example, about 0.5 - 3.5mm. Plastic surface film 24 may be applied to second compound 14 along the bottom side surface of fleece substrate 10 to prevent sticking during manufacturing, storage, and transportation. Plastic surface film 24 may also provide a walkable surface during application to the building structure. Using two compounds and a single fleece substrate in fleece back membrane 20 may help prevent the unsaturated fleece portion of single fleece substrate 10 in fleece back membrane 20 from delaminating during and after installation giving fleece back membrane 20 an advantage over competitors.

Third compound 25 may be applied to the top side surface of fleece substrate 10 to a section along the length of the top surface side of fleece substrate 10 forming side lap area 21. Third compound 25 in side lap area 21 may have a thickness of, for example, about 0.2 - 1.3mm and may penetrate the top side surface of fleece substrate 10 during manufacturing of fleece back membrane 20 contacting first compound 11. Release film 19 may be applied to third compound 25 in side lap area 21 to prevent sticking of third compound 25 during manufacturing, storage, and transportation. Fleece back membrane 20 may have an overall thickness of, for example, about 1.5 - 4.0mm and may have a finished product weight of, for example, about 1.5 - 3.1 kg/m2. Fleece back membrane 20 may be reverse wound as shown in FIG. 9 so that the top side surface of unsaturated fleece substrate 10 becomes the bottom of the fleece back membrane 20 and plastic surface film 24 becomes the top walkable surface of fleece back membrane 20 during application to the building structure. Release film 19 may be removed during application so that third compound 25 in side lap area 21 now located on the bottom side surface of fleece back membrane 20 can bond to plastic surface film 24 located now on the top side surface of fleece back membrane 20 as subsequent rolls of fleece back membrane 20 are overlapped and adhered to the building structure using suitable adhesives, not shown in FIG. 6.

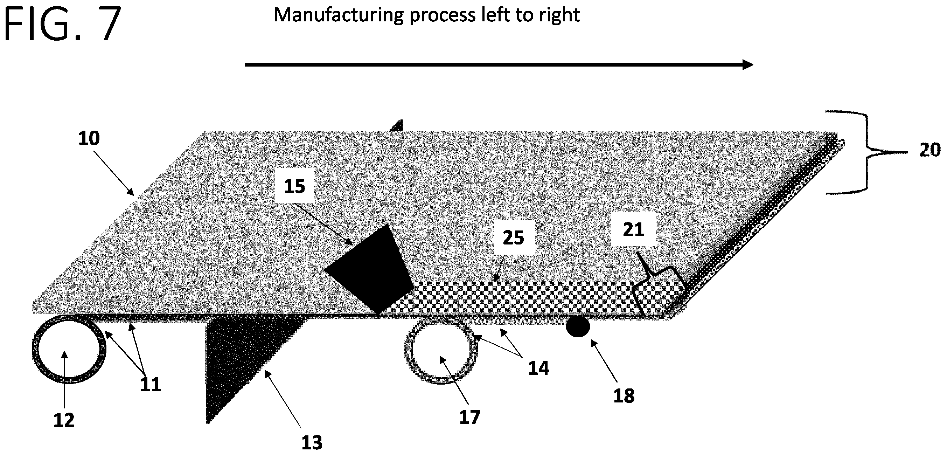

FIG. 7 shows an expanded section for a manufacturing process for fleece back membrane 20. Fleece membrane 20 has a top side surface and a bottom surface side surface. During manufacturing, the bottom side surface of fleece substrate 10, which may be a non-woven polyester (PET) substrate or similar substrate used for fleece back membranes, contacts inking roll 12 containing first compound 11 that partially saturates and coats the entire bottom side surface of fleece substrate 10. Compound 11 penetrates fleece substrate 10 (e.g., to a distance that is about 40-60% of the thickness of fleece substrate 10) leaving the top surface side of fleece substrate 10 unsaturated with first compound 11. First compound 11 may be partially removed from the bottom surface side of fleece substrate 10 using full width scraper 13 leaving a thin layer of first compound 11 in the fleece substrate 10 (e.g., about halfway into the thickness of fleece substrate 10). The weight of first compound 11 in single fleece substrate 10 may be, for example, about 0.2 - 0.8 kg/m2.

The bottom surface side of fleece substrate 10 may encounter bottom thickness roll 17 that applies second compound 14 on the entire bottom side surface of fleece substrate 10 contacting the thin layer of first compound 11. Excess second compound 14 along the bottom surface side of fleece substrate 10 may be removed with rotating smoothing bar 18 forming the desired thickness of, for example, about 0.5 - 3.5mm of second compound 14 on fleece substrate 10. Fleece substrate 10 is now partially saturated during manufacturing with two compounds, compound 11 and compound 14 leaving the upper or top side surface of substrate 10 unsaturated. Using two compounds and a single fleece substrate in fleece back membrane 20 may help prevent the unsaturated fleece portion of single fleece substrate 10 in fleece back membrane 20 from delaminating during and after installation giving fleece back membrane 20 an advantage over competitors.

In this manufacturing process, third compound 25 is applied along one edge of the length of fleece substrate 10 using side lap compound applicator 15 to form side lap 21 to a thickness of, for example, about 0.2 - 1.3mm along one edge of the length of fleece substrate 10. The top side surface of fleece substrate 10 remains unsaturated with first compound 11 or with second compound 14 except in side lap area 21. The membrane is cut to length and reverse wound, not shown, forming fleece back membrane 20 as shown in FIG 5. Membrane 20 may have an overall thickness of, for example, about 1.5 - 4.0mm.

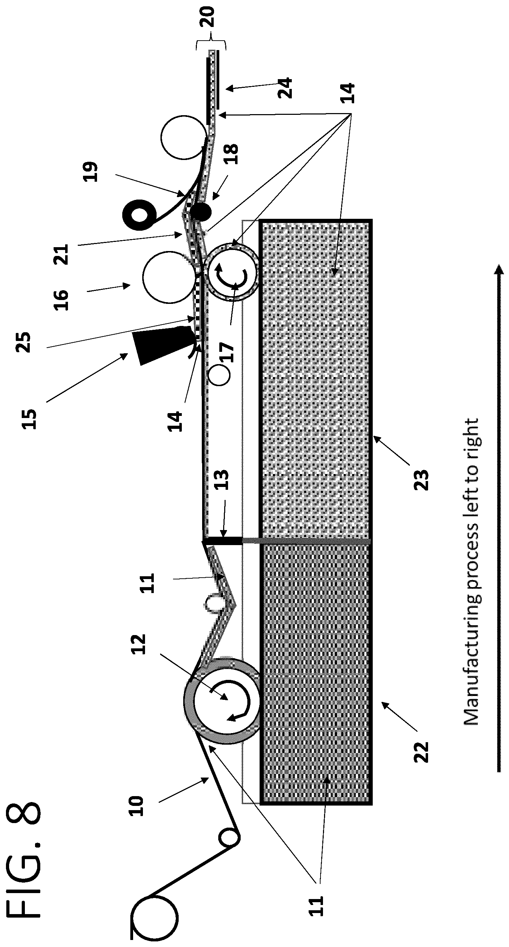

FIG. 8 shows a manufacturing process for fleece back membrane 20. Fleece back membrane 20 has a top side surface and a bottom surface side surface. Fleece substrate 10 has a top side and bottom side surface and is unwound and fed into a dry end looper, not shown, so that the manufacturing process is not interrupted when a new roll of fleece substrate 10 is spliced on, not shown. The bottom side surface of fleece substrate 10 passes onto and encounters inking roll 12 that is in contact with first compound 11 in first compound vat 22. First compound 11 saturates and coats the bottom side surface of fleece substrate 10 and penetrates fleece substrate 10 (e.g., to a distance that is about 40-60% the overall thickness of fleece substrate 10 or about half the thickness of fleece substrate 10).

First compound 11 may be partially removed using full width scraper 13 from the bottom side surface of fleece membrane 10 removing most of first compound 11 but leaving a thin layer of first compound 11 about half the thickness of fleece substrate 10. The bottom side surface of fleece substrate 10 containing compound 11 then encounters bottom thickness roll 17 that applies second compound 14 along the entire bottom side of single fleece substrate 10 from second vat 23. Second compound 14 is applied to the bottom side surface of fleece substrate 10 so that it encounters and joins up with the thin layer of first compound 11. Using two compounds and a single fleece substrate in fleece back membrane 20 may help prevent the unsaturated fleece portion of single fleece substrate 10 in fleece back membrane 20 from delaminating during and after installation giving fleece back membrane 20 an advantage over competitors.

Excess second compound 14 may be removed using rotating smoothing bar 18 forming the desired thickness of about 0.5 - 3.5mm along the entire bottom side surface of fleece substrate 10. Plastic surface film 24 may be applied to second compound 14 on the bottom side surface of fleece substrate 10 to prevent sticking during manufacturing, storage, and transportation. Plastic film 24 may also form a walking surface during application to the building structure. Third compound 25 in this manufacturing process may be applied along one edge the length of fleece substrate 10, to a section of the top side surface of fleece substrate 10 in side lap area 21 using side lap compound applicator 15. The thickness of third compound 25 may be, for example, about 0.2 - 1.3mm in side lap area 21, and the thickness may be controlled with top thickness roll 16. Release film 19 may be applied to third compound 25 in side lap area 21 to prevent sticking during manufacturing, storage, and transportation. Fleece back membrane 20 may have an overall thickness of, for example, about 1.5 - 4.0mm and may have a finished product weight of, for example, about 1.5 - 3.1 kg/m2. Fleece back membrane 20 may be cut to the desired length and reverse wound as shown in FIG. 9. Release film 19 may be removed during application to bond overlapping rolls of fleece back 20.

FIG. 9 shows fleece back membrane 20 that has been reverse wound so that plastic surface film 24 is now on the top side surface of the roll of fleece back membrane 20 providing a walkable surface as it is installed on a building structure. The unsaturated top side surface of single fleece substrate 10 that has been partially saturated with two compounds, compound 11 and compound 14 (e.g., to a thickness that is about 40-60% the overall thickness of fleece substrate 10), is now the bottom side surface of the roll of fleece membrane 20 so that it can be adhered to light weight concrete, rough surfaces and other membranes or structures using a suitable adhesive like low rise foam, hot mopped asphalt and or mastics as desired.

Side lap area 21 is also now located on the bottom side surface of the roll of fleece back membrane 20. Side lap area 21 may be made of second compound 14 or third compound 25 as desired and may be covered with side lap release film 19. Side lap release film 19 may be removed during installation exposing compound 14 or compound 25 in side lap area 21 so that subsequent rolls of fleece back membrane 20 can be overlapped and adhered together when compound 14 or compound 25 contacts plastic surface film 24 located on an overlapping subsequent roll of fleece back membrane 20.

In some embodiments, first compound 11 may be a modified bitumen compound made with plastic materials like polyethylene and polypropylene as is known in the industry. First compound 11 may have fillers like talc, limestone, dolomite, and or sand, to name a few. First compound 11 may be made with or without flame retardants like Colemanite, unexpanded graphite, unexpanded perlite, or with liquid halogen flame retardants as desired.

In some other embodiments, first compound 11 may be a modified bitumen made of rubber compounds like SBS, SEBS, SIS, and or SB as is known in the industry. First compound 11 may have fillers like talc, limestone, dolomite, and or sand, to name a few. First compound 11 may be made with or without flame retardants like Colemanite, unexpanded graphite, unexpanded perlite, or with liquid halogen flame retardants as desired.

In some other embodiments, first compound 11 may be bitumen. First compound 11 may have fillers like talc, limestone, dolomite, and or sand, to name a few. First compound 11 may be made with or without flame retardants like Colemanite, unexpanded graphite, unexpanded perlite, or with liquid halogen flame retardants as desired.

In some other embodiments, second compound 14 may be a modified bitumen made of rubber compounds like SBS, SEBS, SIS, and or SB as is known in the industry. Second compound 14 may have fillers like talc, limestone, dolomite, and or sand, to name a few. Second compound 14 may be made with or without flame retardants like Colemanite, unexpanded graphite, unexpanded perlite, or with liquid halogen flame retardants as desired. Second compound 14 may have adhesive properties for bonding overlapping rolls during installation.

In some other embodiments, third compound 25 may be a modified bitumen made of rubber compounds like SBS, SEBS, SIS, and or SB as is known in the industry. Second compound 14 may have fillers like talc, limestone, dolomite, and or sand, to name a few. Second compound 14 may be made with or without flame retardants like Colemanite, unexpanded graphite, unexpanded perlite, or with liquid halogen flame retardants as desired. Third compound 25 may have adhesive properties for bonding overlapping rolls during installation.

In some embodiments, fleece substrate 10 may be made of non-woven polyester (PET) with a basis weight of, for example, 140 - 300 g/m2, with a width between 0.7 and 1.5 meters and a thickness between, for example, 0.5 and 2.5mm. First compound 11 may be made of a plastic modified bitumen compound including bitumen, atactic polypropylene, low density polypropylene, isotactic polypropylene and limestone filler that has a specific gravity between 1.1 - 2.0, has a viscosity between 1000 - 12000 cps measured at 180C using ASTM D4402, has a ring and ball softening point of 100-160 Celsius using ASTM D36, and has a needle penetration @60°C, 100g total weight for 5 seconds of 40-160 dmm using ASTM D5.

First compound 11 may saturate the entire bottom side surface of fleece substrate 10 to a depth that is 40-60% of the total thickness of fleece substrate 10. The weight of first compound 11 in single fleece substrate 10 may be, for example, about 0.2 - 0.8 kg/m2. First compound 11 may be partially removed leaving a thin layer of first compound 11 about halfway into fleece substrate 10.

Second compound 14 may be specially formulated SBS compound with high elastic recovery that is hard enough to walk on, that does not footprint during application, but still has adhesive properties to bond overlapping rolls during installation. Second compound 14 may be made with a rubber modified bitumen compound including bitumen, SBS, tackifier and limestone filler with a specific gravity of 0.7 - 1.8, has a viscosity of 1000 - 10000 cps measured at 180C using ASTM D4402, may have a ring and ball softening point of 100 - 130 Celsius using ASTM D36, may have a needle penetration @25°C, 100g total weight for 5 seconds of 50-100 dmm using ASTM D5, and may have a needle penetration @60C, 100g total weight for 5 seconds of 100 - 240 dmm using ASTM D5.

Third compound 25 may be specially formulated SBS compound with high elastic recovery that has self-adhering properties to bond overlapping rolls during installation. Third compound 25 may be softer than second compound 14 and may be made with a rubber modified bitumen compound including bitumen, SBS, tackifier and limestone filler with a specific gravity of 0.7 - 1.8, may have a viscosity of 100 - 3000 cps measured at 180C using ASTM D4402, may have a ring and ball softening point of 80 - 130 Celsius using ASTM D36, and may have a needle penetration @25°C, 50g total weight for 5 seconds of 40 - 150 dmm using ASTM D5.

Second compound 14 or third compound 25 may be applied in side lap area 21 to a thickness of, for example, about 0.2 - 1.3mm using side lap compound applicator 15 on the top side surface of fleece substrate 10 to a width of, for example, 76 +/- 5 mm and weighing about, for example, 25 - 45 g/m for bonding overlapping rolls of fleece back membrane 20. Second compound 14 may be applied to the bottom side surface of fleece substrate 10 to a thickness of, for example, 0.5 - 3.5mm. Fleece back membrane 20 may be finished with side lap release film 19 and plastic surface film 24. Fleece back membrane 20 may have a finished product weight between, for example, 1.2 - 5.0 kg/m2 (e.g., between 1.5 - 3.1 kg/m2) and may have a Youngs modulus of, for example, 250 - 350 MPa in the machine direction (MD) and a Youngs Modulus of, for example, 100 - 200 MPa in the cross-machine direction (CMD) as tested by ASTM D882.

In some embodiments, fleece substrate 10 may be made of non-woven polyester (PET) with a basis weight of, for example, 150 - 250 g/m2, with a width between, for example, 0.8 and 1.2 meters and a thickness between, for example, 0.6 and 1.9 mm. First compound 11 may be made of a plastic modified bitumen compound including bitumen, atactic polypropylene, low density polypropylene, isotactic polypropylene and limestone filler that may have a specific gravity between, for example, 1.3 - 1.7, may have a viscosity between, for example, 4000 - 10000 cps measured at 180C using ASTM D4402, may have a ring and ball softening point of, for example, 110 - 150 Celsius using ASTM D36, and/or may have a needle penetration @60C, 100g total weight for 5 seconds of 50 - 150 dmm using ASTM D5.

First compound 11 may saturate the entire bottom side of fleece substrate 10 to a depth that is 40-60% of the total thickness of fleece substrate 10. The weight of first compound 11 in single fleece substrate 10 may be, for example, about 0.2 - 0.8 kg/m2. First compound 11 may be partially removed leaving a thin layer of first compound 11 in fleece substrate 10 (e.g., about halfway into fleece substrate 10).

Second compound 14 may be specially formulated SBS compound with high elastic recovery that is hard enough to walk on, that does not footprint during application, but still has adhesive properties to bond overlapping rolls during installation. Second compound 14 may be made with a rubber modified bitumen compound including bitumen, SBS, tackifier and limestone filler with a specific gravity of 0.8 - 1.5, may have a viscosity of 4000 - 8000 cps measured at 180C using ASTM D4402, may have a ring and ball softening point of 105 - 125 Celsius using ASTM D36, may have a needle penetration @25C, 100g total weight for 5 seconds of 60 - 90 dmm using ASTM D5, and/or may have a needle penetration @60C, 100g total weight for 5 seconds of 130 - 210 dmm using ASTM D5.

Third compound 25 may be specially formulated SBS compound with high elastic recovery that may have self-adhering properties to bond overlapping rolls during installation. Third compound 25 may be softer than second compound 14 and may be made with a rubber modified bitumen compound including bitumen, SBS, tackifier and limestone filler with a specific gravity of 0.7 - 1.8, may have a viscosity of 200 - 2800 cps measured at 180C using ASTM D4402, may have a ring and ball softening point of 95 - 115 Celsius using ASTM D36, and/or may have a needle penetration @25C, 50g total weight for 5 seconds of 60 - 130 dmm using ASTM D5.

Second compound 14 or third compound 25 may be applied in side lap area 21 to a thickness of about 0.2 - 1.3mm using side lap compound applicator 15 on the top side surface of fleece substrate 10 (e.g., to a width of 76 +/- 5 mm and/or weighing between 25 - 45 g/m) for bonding overlapping rolls of fleece back membrane 20. Second compound 14 may be applied to the bottom side surface of fleece substrate 10 (e.g., to a thickness of 0.8 - 1.3 mm). Fleece back membrane 20 may be finished with side lap release film 19 and plastic surface film 24. Fleece back membrane 20 may have a finished product weight between 1.5 - 3.1 kg/m2, a Youngs modulus of 250 - 350 MPa in the machine direction (MD), and/or a Youngs Modulus of 100 - 200 MPa in the cross-machine direction (CMD) as tested by ASTM D882.

In some embodiments, fleece substrate 10 may be made of non-woven polyester (PET) with a basis weight of 170 - 190 g/m2, with a width between 0.9 and 1.1 meters and a thickness between 0.7 and 1.3 mm. First compound 11 may be made of a plastic modified bitumen compound including bitumen, atactic polypropylene, low density polypropylene, isotactic polypropylene and limestone filler that has a specific gravity between 1.4 - 1.6, has a viscosity between 5000 - 9000 cps measured at 180C using ASTM D4402, has a ring and ball softening point of 120 - 140 Celsius using ASTM D36, and/or has a needle penetration @60C, 100g total weight for 5 seconds of 60 - 140 dmm using ASTM D5.

First compound 11 may saturate the entire bottom side of fleece substrate 10 (e.g., to a depth that is 40-60% of the total thickness of fleece substrate 10). The weight of first compound 11 in single fleece substrate 10 may be about 0.4 - 0.6 kg/m2. First compound 11 may be partially removed leaving a thin layer of first compound 11 in fleece substrate 10 (e.g., about halfway into fleece substrate 10).

Second compound 14 may be specially formulated SBS compound with high elastic recovery that is hard enough to walk on, that does not footprint during application, but still has adhesive properties to bond overlapping rolls during installation. Second compound 14 may be made with a rubber modified bitumen compound including bitumen, SBS, tackifier and limestone filler with a specific gravity of 0.9 - 1.2 and may have a viscosity of 5000 - 7000 cps measured at 180C using ASTM D4402, may have a ring and ball softening point of 110 - 120 Celsius using ASTM D36, may have a needle penetration @25C, 100g total weight for 5 seconds of 70 - 85 dmm using ASTM D5, and/or may have a needle penetration @60C, 100g total weight for 5 seconds of 150 - 200 dmm using ASTM D5.

Third compound 25 may be specially formulated SBS compound with high elastic recovery that has self-adhering properties to bond overlapping rolls during installation. Third compound 25 may be softer than second compound 14 and may be made with a rubber modified bitumen compound of including bitumen, SBS, tackifier and limestone filler with a specific gravity of 0.7 - 1.8, may have a viscosity of 300 - 2500 cps measured at 180C using ASTM D4402, may have a ring and ball softening point of 100 - 110 Celsius using ASTM D36, and/or may have a needle penetration @25C, 50g total weight for 5 seconds 70 - 110 dmm using ASTM D5.

Second compound 14 or third compound 25 may be applied in side lap area 21 to a thickness of about 0.2 - 1.3mm using side lap compound applicator 15 on the top side surface of fleece substrate 10 (e.g., to a width of 76 +/- 5 mm and/or weighing between 25 - 45 g/m) for bonding overlapping rolls of fleece back membrane 20. Second compound 14 may be applied to the bottom side surface of fleece substrate 10 to a thickness of 0.8 - 1.3 mm. Fleece back membrane 20 may be finished with side lap release film 19 and plastic surface film 24. Fleece back membrane 20 may have a finished product weight between 1.5 - 3.1 kg/m2, a Youngs modulus of 250 - 350 MPa in the machine direction (MD), and/or a Youngs Modulus of 100 - 200 MPa in the cross-machine direction (CMD) as tested by ASTM D882.

The process to produce fleece back membrane 20 may include a first step of unrolling single fleece substrate 10 from a master roll of fleece substrate. The process may include a second step of passing fleece substrate 10 over kiss roll 12 that is in contact with first compound 11 from first compound vat 22 and applying first compound 11 to the bottom side of fleece substrate 10. First compound 11 may penetrate fleece substrate 10 (e.g., to a depth of 40 - 60% the total thickness of fleece substrate 10). The process may include a third step of partially removing first compound 11 from fleece substrate 10 with full width scraper 13 leaving a thin layer of first compound 11, which may weigh, for example, between 0.3 - 0.7 kg/m², in fleece substrate 10. The process may include a fourth step of applying second compound 14 or third compound 25 to side lap area 21 to a thickness of about 0.2 - 1.3mm (e.g., to a width of 76 +/- 5 mm and weighing between 25 - 45 g/m) using side lap compound applicator 15 on the top side of fleece substrate 10. The process may include a fifth step of using a top thickness roller to adjust the thickness of second compound 14 or third compound 25 in side lap area 21. The process may include a sixth step of applying side lap release film 19 to second compound 14 or third compound 25 in side lap area 21. The process may include a seventh step of applying second compound 14 to the bottom of fleece substrate 10, and the second compound 14 may penetrates fleece substrate 10 to the depth of first compound 11 when contacting bottom thickness roll 17 in second compound vat 23. The process may include an eighth step of using a rotating smoothing bar 18 to remove excess second compound 14 (e.g., so that a thickness of 0.8 - 1.3 mm of second compound 14 remains on the bottom surface of fleece substrate 10).

The process may include a ninth step of applying plastic surface film 24 to second compound 14 on the bottom of fleece substrate 10 creating fleece back membrane 20. The process may include a tenth step of reverse winding fleece back membrane 20 so that the unsaturated portion of fleece substrate 10 with side lap area 21 becomes the bottom of fleece back membrane 20 and plastic surface film 24 becomes the top surface of fleece back membrane 20 as shown in FIG. 9.

While the subject matter of this disclosure has been described and shown in considerable detail with reference to certain illustrative embodiments, including various combinations and sub-combinations of features, those skilled in the art will readily appreciate other embodiments and variations and modifications thereof as encompassed within the scope of the present disclosure. Moreover, the descriptions of such embodiments, combinations, and sub-combinations is not intended to convey that the claimed subject matter requires features or combinations of features other than those expressly recited in the claims. Accordingly, the scope of this disclosure is intended to include all modifications and variations encompassed within the spirit and scope of the following appended claims.

### PARTS LIST

10 Fleece Substrate
11 First Compound
12 Inking Roll
13 Full Width Scraper
14 Second Compound
15 Side Lap Compound Applicator
16 Top Thickness Roll
17 Bottom thickness Roll
18 Rotating Smoothing Bar
19 Side Lap Release film
20 Fleece Back Membrane
21 Side Lap Area
22 First Compound Vat
23 Second Compound Vat
24 Plastic Surface Film
25 Third compound

## Claims

1. A fleece back membrane (20) comprising:
a fleece substrate (10) including a first surface and a second surface opposite the first surface, wherein the first surface of the fleece substrate (10) is exposed;
a first compound (11) in the fleece substrate (10) between the first and second surfaces of the fleece substrate;
a second compound (14) in the fleece substrate (10) between the first compound (11) and the second surface of the fleece substrate (10) and covering the second surface of the fleece substrate (10), wherein the second compound (14) is different than the first compound (11); and
a plastic surface film (24) applied to the second compound (14) that covers the second surface of the fleece substrate (10).

2. The fleece back membrane (20) of claim 1, wherein the second surface of the fleece back membrane (20) is partially saturated with the first compound (11) between 40 - 60% the thickness of the fleece substrate (10).

3. The fleece back membrane (20) of claim 2, wherein the first compound (11) is partially scraped off the second surface of the fleece substrate (10), and the second compound (14) is applied to that second surface of the fleece substrate (10) after the first compound (11) is partially scraped off the second surface of the fleece substrate (10).

4. The fleece back membrane (20) of claim 1, wherein the exposed first surface of the fleece substrate (10) is unsaturated.

5. The fleece back membrane (20) of claim 1, wherein the fleece substrate (10) is a non-woven polyester.

6. The fleece back membrane (20) of claim 1, wherein the first compound (11) is a plastic modified bitumen compound.

7. The fleece back membrane (20) of claim 1, wherein the second compound (14) is a self-adhering rubber modified bitumen compound.

8. The fleece back membrane (20) of claim 1, further comprising a self-adhering compound (25) located in a side lap area (21) of the fleece substrate (10) along one edge of the exposed first surface of the fleece substrate (10).

9. The fleece back membrane (20) of claim 8, wherein the self-adhering compound (25) in the side lap area (21) of the fleece substrate (10) and the second compound (14) are the same.

10. A process of making a fleece back membrane (20), the process comprising:
passing a fleece substrate (10) over a kiss roll (12) that is in contact with a first compound (11) from a first compound vat (22), wherein the fleece substrate (10) includes a first surface and a second surface opposite the first surface, and the first compound (11) partially penetrates the fleece substrate (10) through the second surface of the fleece substrate (10);
partially removing the first compound (11) from the second surface of the fleece substrate (10) with a full width scraper (13) and leaving a thin layer of the first compound (11) in the fleece substrate (10) between the first and second surfaces of the fleece substrate (10);
applying a second compound (14) to the second surface of the fleece substrate (10), wherein the second compound (14) penetrates the fleece substrate (10) to the first compound (11) when contacting a bottom thickness roll (17) in a second compound vat (23), the second compound (14) that penetrates the fleece substrate (10) is between the first compound (11) and the second surface of the fleece substrate (10), and the second compound (14) is different than the first compound (11);
using a rotating smoothing bar (18) to remove excess second compound (14) from the second surface of the fleece substrate (10), wherein the second compound (14) covers the second surface of the fleece substrate (10); and
applying a plastic surface film (24) to the second compound (14) on the bottom surface of the fleece substrate (10) to create the fleece back membrane (20), wherein the first surface of the fleece substrate (10) is exposed.

11. The process of claim 10, wherein the first compound (11) penetrates the second surface of the fleece substrate (10) about halfway.

12. The process of claim 10, further comprising applying a self-adhering compound (25) to a side lap area (21) on the first side of the fleece substrate (10) using a side lap compound applicator (15).

13. The process of claim 12, further comprising using a top thickness roller (16) to adjust a thickness of the self-adhering compound (25) in the side lap area (21).

14. The process of claim 12, further comprising applying a side lap release film (19) to the self-adhering compound (25) in the side lap area (21).

15. The process of claim 10, wherein, after using the rotating smoothing bar (18) to remove the excess self-adhering second compound (14) from the second surface of the fleece substrate (10), a thickness of 0.2 - 1.3 mm of the second compound (14) remains on the second surface of the fleece substrate (10).
